# EUROPÄISCHE PATENTSCHRIFT

(11) **EP 3 095 412 B1**
(45) Veröffentlichungstag und Bekanntmachung des Hinweises auf die Patenterteilung: **05.09.2018**
(21) Anmeldenummer: 16164903.3
(22) Anmeldetag: 12.04.2016
(51) Int. Cl.: A61C 13/12, A61C 13/00

(54) **ROHLING ZUR HERSTELLUNG EINES DENTALELEMENTS**
BLANK FOR PRODUCING A DENTAL ELEMENT
ÉBAUCHE DESTINÉE À FABRIQUER UNE PROTHÈSE DENTAIRE

(30) Priorität: 30.04.2015 AT 503522015
(43) Veröffentlichungstag der Anmeldung: 23.11.2016
(60) Teilanmeldung: 17165754.7
(73) Patentinhaber: STEGER, Heinrich, 39031 Bruneck (IT)
(72) Erfinder: STEGER, Heinrich, 39031 Bruneck (IT)
(74) Vertreter: Torggler & Hofinger Patentanwälte

(56) Entgegenhaltungen:
- EP-A1- 0 480 209
- DE-A1-102011 055 393
- US-A1- 2009 130 634

## Beschreibung

Die Erfindung betrifft einen Rohling zur Herstellung eines Dentalelements (z. B. eines Dentalmodells oder eines dentalen Ersatzteils), mit einer ersten Seite, einer zweiten Seite und zumindest einer von der zweiten Seite beabstandeten Haupthaltefläche zum Festhalten des Rohlings über die zweite Seite und die Haupthaltefläche an einer Haltevorrichtung, wobei der Rohling zwischen Haupthaltefläche und Rückseite eine Standard-Haltedicke aufweist.

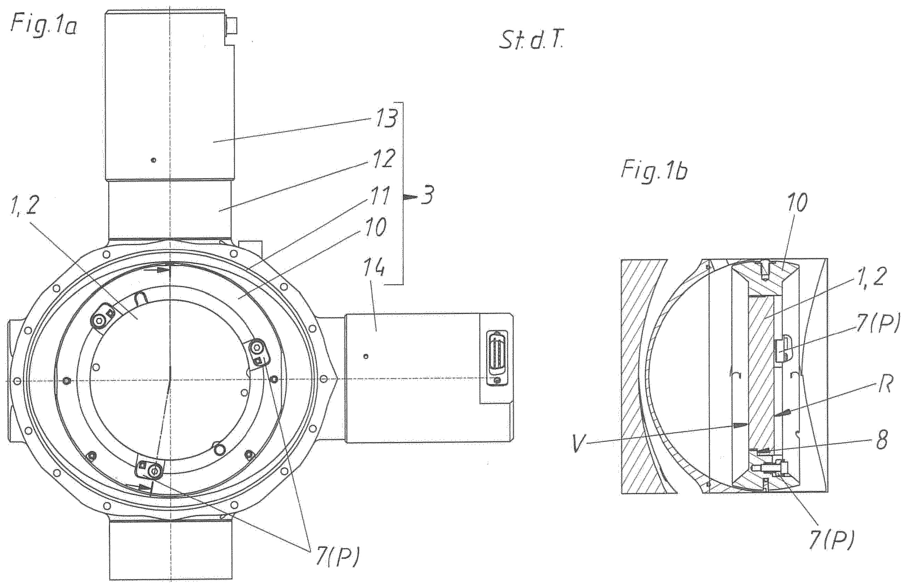

Ein derartiger Rohling nach dem Stand der Technik geht aus den Fig. 1a bis 2c hervor, welche im Folgenden im Detail beschrieben werden.

Fig. 1a zeigt eine Haltevorrichtung 3 für einen Rohling 1, 2, wie er bereits seit einiger Zeit von der Anmelderin hergestellt, angeboten und verkauft wird. Eine derartige Haltevorrichtung weist einen im Wesentlichen C-förmigen Träger 12 auf, an welchem die Antriebsmotoren 13 und 14 angeordnet sind. Am Träger 12 ist der äußere Haltering 11 drehbar gelagert. An diesem äußeren Haltering 11 wiederum ist der innere Haltering 10 drehbar gelagert. Im inneren Haltering 10 ist über die Spannvorrichtung 6 und deren Spannteile 7 der Rohling 1, 2 einspannbar, wobei sich die Spannteile 7 in Fig. 1a in einer passiven Stellung P befinden. In Fig. 1a wird mit den eingezeichneten Pfeilen auf eine Schnittachse hingewiesen, wobei der dazugehörige Schnitt in Fig. 1b dargestellt ist. Erkennbar ist dabei, dass der Rohling 1, 2 in den inneren Haltering 10 eingesetzt ist und auf einer Spannfläche 8 aufliegt. Der Rohling 1, 2 weist dabei eine erste Seite (entspricht einer Vorderseite V) und eine zweite Seite (entspricht einer Rückseite R) auf.

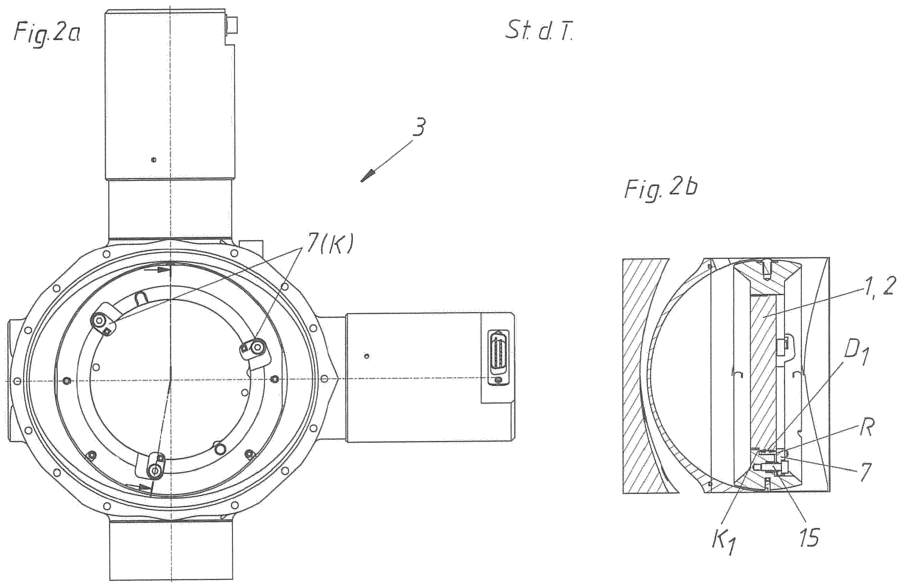

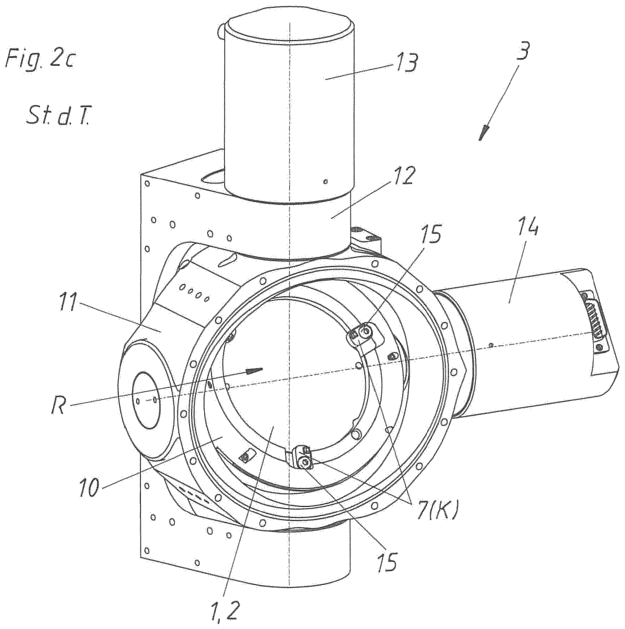

Um den Rohling 1, 2 nun an der Haltevorrichtung 3 festzuhalten, werden gemäß den Fig. 2a und 2b die Spannteile 7 um die Spannbolzen 15 der Spannvorrichtung 6 gedreht, wodurch die Spannteile 7 in eine Spannstellung K gelangen. In dieser Spannstellung K ist der Rohling 1, 2 über die am Rohling 1, 2 ausgebildeten Haupthalteflächen K₁ und die Rückseite (R) zwischen den Spannflächen 8 und den Spannteilen 7 der Spannvorrichtung 6 eingeklemmt. Der Rohling 1, 2 weist zwischen seiner Rückseite (R) und jeder Haupthaltefläche K₁ eine Standard-Haltedicke D₁ auf. Bei einer bevorzugten Ausführungsvariante beträgt diese Standard-Haltedicke D₁ 10 mm. In Fig. 2c ist die Haltevorrichtung 3 samt eingespanntem Rohling 1, 2 in einer 3D-Ansicht dargestellt. Es sind auch die Drehachsen für die beiden Halteringe 10 und 11 erkennbar.

Ähnliche Rohlinge sind auch aus der WO 2013/072287 A1, der WO 2013/122662 A1, der WO 2010/094922 A1 und der DE 203 16 004 U1 bekannt. Ein gattungsfremder Rohling zur Herstellung eines zahntechnischen Formteils geht aus der EP 0 480 209 A1 hervor.

Diese aus dem Stand der Technik bekannten Rohlinge sind in Haltevorrichtungen auf bewährte Art und Weise zeitlich nacheinander bearbeitbar, wodurch dentale Ersatzteile hergestellt werden.

Die Aufgabe der vorliegenden Erfindung besteht darin, einen gegenüber dem Stand der Technik veränderten bzw. verbesserten Rohling zu schaffen. Insbesondere soll der Rohling vielseitiger einsetzbar sein. Zudem soll für einen Benutzer das Arbeiten vereinfacht werden. Weiters soll der Arbeitsaufwand verringert werden. Besonders soll mit möglichst wenigen Arbeitsschritten die Herstellung von mehreren Dentalelementen möglich sein.

Dies wird durch einen Rohling mit den Merkmalen von Anspruch 1 gelöst. Demnach weist der Rohling erfindungsgemäß zumindest eine von der zweiten Seite beabstandete Hilfshaltefläche zum Festhalten des Rohlings an einer Haltevorrichtung auf, wobei der Rohling zwischen der zumindest einen Hilfshaltefläche und der zweiten Seite eine Sonder-Haltedicke aufweist, wobei die Standard-Haltedicke größer ist als die Sonder-Haltedicke. Dadurch ist es möglich, dass in ein und derselben Haltevorrichtung entweder ein einzelner Rohling über die zumindest eine Haupthaltefläche eingespannt wird oder zwei Rohlinge über die jeweiligen schmäleren Hilfshalteflächen gleichzeitig in derselben Haltevorrichtung eingespannt werden. Dadurch können nach einem einzigen Befestigungsvorgang Dentalelemente aus zwei unterschiedlichen Rohlingen herausgearbeitet werden, ohne dazwischen ein Umspannen bzw. ein neues Festspannen durchführen zu müssen. Generell erleichtert somit die zumindest eine schmälere Sonder-Haltedicke das Festhalten von zwei derartigen Rohlingen in ein und derselben Haltevorrichtung.

Schutz wird auch begehrt für ein Set nach Anspruch 9. Demnach ist vorgesehen, dass die Sonder-Haltedicke des ersten Rohlings und die Sonder-Haltedicke des zweiten Rohlings addiert die Standard-Haltedicke ergibt. Dadurch können für eine Haltevorrichtung zwei zueinander unterschiedliche Rohlinge bereitgestellt, die aber dennoch in eine unveränderte Haltevorrichtung passen. Beispielsweise kann also vorgesehen sein, dass Sonder-Haltedicke eines Rohlings bei ca. 7 mm liegt, während die Sonder-Haltedicke des anderen Rohlings ca. 3 mm beträgt, sodass sich insgesamt wieder die Standard-Haltedicke ergibt, wenn zwei Rohling entsprechend aneinanderliegend eingespannt werden.

Für eine einfache Massenfertigung ist allerdings bevorzugt vorgesehen, dass die Standard-Haltedicke doppelt so groß wie die Sonder-Haltedicke ist. In einem konkreten Ausführungsbeispiel bedeutet dies zum Beispiel, dass die Sonder-Haltedicke immer 5 mm beträgt. Natürlich sind auch größere oder kleinere Millimeterabmessungen möglich, solange ein ausreichender Halt garantiert ist und die Rohlinge in der Haltevorrichtung eingespannt werden können.

Für ein einfaches Anbringen des Rohlings an der Haltevorrichtung ist bevorzugt vorgesehen, dass mehrere, vorzugsweise drei, Haupthalteflächen regelmäßig, vorzugsweise jeweils um 120°, voneinander beabstandet am Rohling ausgebildet sind. Weiters ist es von Vorteil, wenn mehrere, vorzugsweise drei, Hilfshalteflächen regelmäßig, vorzugsweise jeweils um 120°, voneinander beabstandete am Rohling ausgebildet sind. Um ausreichend Platz für das Festhalten am Rohling zu garantieren, ist bevorzugt vorgesehen, dass die Haupthaltefläche und die Hilfshaltefläche voneinander beabstandet am Rohling ausgebildet sind. Dabei kann vorgesehen sein, dass die mehreren Haupthalteflächen und die mehreren Hilfshalteflächen voneinander regelmäßig, vorzugsweise jeweils um 60°, beabstandet am Rohling ausgebildet sind.

An sich ist die Form des Rohlings beliebig. So kann der Rohling bspw. quaderförmig, kieferbogenförmig, würfelig oder auf ähnliche Art und Weise ausgebildet sein. Besonders bevorzugt ist allerdings vorgesehen, dass der Rohling scheibenförmig ausgebildet ist und die im Wesentlichen ebene erste Seite, die im Wesentlichen ebene und zur ersten Seite parallele zweite Seite und eine im Wesentlichen rechtwinkelig zur zweiten Seite und zur ersten Seite ausgerichtete Umfangsfläche aufweist.

Grundsätzlich können die Haupthaltefläche und auch die Hilfshaltefläche beliebig am Rohling ausgebildet, angeordnet und ausgerichtet sein, solange diese Flächen mit den entsprechenden Gegenflächen der Spannvorrichtung zusammenpassen. Bei einem scheibenförmigen Rohling ist aber bevorzugt vorgesehen, dass die zumindest eine Haupthaltefläche und die zumindest eine Hilfshaltefläche parallel zu ersten Seite und zur zweiten Seite ausgerichtet sind. Bevorzugt werden die Standard-Haltedicke und die Sonder-Haltedicke jeweils parallel zur Umfangsfläche gemessen.

Wenn der Rohling scheibenförmig ausgebildet ist, ist ganz besonders bevorzugt vorgesehen, dass die Umfangsfläche im Wesentlichen kreiszylindermantelförmig ausgebildet ist. Natürlich können in Teilbereichen auch Abweichungen von der Kreiszylindermantelform gegeben sein. Insbesondere ist nämlich vorgesehen, dass die zumindest eine Haupthaltefläche und die zumindest eine Hilfshaltefläche in Form von Ausnehmungen in erster Seite und Umfangsfläche ausgebildet sind. Bevorzugt ist die Umfangsfläche des Rohlings im Bereich außerhalb der Ausnehmungen gänzlich kreizylindermantelförmig ausgebildet.

Eine Weiterbildung der Erfindung sieht eine Anordnung mit zwei Rohlingen und einer Haltevorrichtung zum Festhalten der beiden Rohlinge vor.

Für ein einfaches Festspannen der beiden Rohlinge ist bevorzugt vorgesehen, dass die Haltevorrichtung zumindest eine, vorzugsweise drei, Spannvorrichtung aufweist, wobei die Rohlinge über ihre Hilfshalteflächen von de Spannvorrichtung an der Haltevorrichtung festspannbar sind. Bei einem konkreten Ausführungsbeispiel ist dazu weiters vorgesehen, dass - bei mehreren Spannvorrichtungen - jede Spannvorrichtung ein bewegbares Spannteil und eine Spannfläche aufweist, wobei in eingespanntem Zustand eine Hilfshaltefläche des einen Rohlings an der Spannfläche aufliegt und eine Hilfshaltefläche des anderen Rohlings am Spannteil anliegt. Natürlich kann über dieselbe Spannvorrichtung auch ein einzelner Rohling über die Haupthaltefläche und die Rückseite eingespannt werden.

Prinzipiell ist es möglich, dass die Spannvorrichtung geeignet ist, um unterschiedlich dicke Rohlinge einzuspannen. So kann die Spannvorrichtung zueinander variabel einstellbare Spannteile und Spannflächen aufweisen. Bevorzugt ist für eine einfache Bauweise allerdings vorgesehen, dass das bewegbare Spannteil und die Spannfläche der Spannvorrichtung zueinander einen im Wesentlichen unveränderlichen, vorzugsweise der Standard-Haltedicke entsprechenden, Abstand aufweisen. Somit können in ein und dieselbe, einfach gebaute Spannvorrichtung sowohl ein Rohling als auch zwei Rohling eingespannt werden.

Für eine einfache Herstellung, Lagerhaltung und Verwendung ist bevorzugt vorgesehen, dass die beiden Rohlinge identisch ausgebildet sind.

Grundsätzlich müssen sich die Rohlinge in eingespanntem Zustand über ihre Rückseiten nicht berühren. Für ein einfaches Festhalten ohne irgendein Zwischenstück ist aber bevorzugt vorgesehen, dass die Rohlinge in eingespanntem Zustand über die einander zugewandten Rückseiten teilweise oder vollständig aneinander anliegen.

Gemäß einem weiteren bevorzugten Ausführungsbeispiel weist eine solche Anordnung auch eine Bearbeitungsvorrichtung zum Bearbeiten der beiden in der Haltevorrichtung eingespannten Rohlinge auf, wobei von der Bearbeitungsvorrichtung über die im Wesentlichen komplett zugänglichen Vorderseiten beide Rohlinge bearbeitbar sind. Mithin sind die Bearbeitungsvorrichtung und die Haltevorrichtung so zueinander relativ bewegbar, dass beide Vorderseiten bearbeitbar sind.

Schutz wird auch begehrt für ein Verfahren zum Festspannen von zwei erfindungsgemäßen Rohlingen an einer Haltevorrichtung. Dabei sind die Schritte Einsetzen eines ersten Rohlings in die Haltevorrichtung, wobei der erste Rohling über zumindest eine Hilfshaltefläche auf einer Spannfläche einer Spannvorrichtung der Haltevorrichtung aufliegt, Einsetzen des zweiten Rohlings in die Haltevorrichtung, wobei die Rohlinge mit ihren jeweiligen Rückseiten einander zugewandt sind und die zumindest eine Hilfshaltefläche des zweiten Rohlings passend zu der zumindest einen Hilfshaltefläche des ersten Rohlings ausgerichtet ist und Bewegen des Spannteils der Spannvorrichtung der Haltevorrichtung aus einer passiven Stellung in eine Spannstellung, sodass in der Spannstellung das Spannteil an der zumindest einen Hilfshaltefläche des zweiten Rohlings anliegt und beide Rohlinge gemeinsam über die jeweiligen Hilfshalteflächen zwischen Spannteil und Spannfläche der Spannvorrichtung der Haltevorrichtung eingespannt bzw. eingeklemmt sind, vorgesehen.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1a und 1: b eine Haltevorrichtung samt Rohling nach dem Stand der Technik mit einer Spannvorrichtung in passiver Stellung,
- Fig. 2a bis 2c: eine Haltevorrichtung samt Rohling nach dem Stand der Technik mit einer Spannvorrichtung in einer Spannstellung,
- Fig. 3a bis 3g: unterschiedliche Ansichten eines erfindungsgemäßen Rohlings,
- Fig. 4a und 4b: zwei in eine Haltevorrichtung eingesetzte Rohlinge,
- Fig. 5a bis 5c: die beiden eingespannten Rohlinge bei Spannstellung der Spannvorrichtung,
- Fig. 6a bis 6g: unterschiedliche Ansichten eines bereits vorgefrästen Rohlings,
- Fig. 7a und 7b: unterschiedliche Ansichten einer Anordnung mitsamt Haltevorrichtung und Bearbeitungsvorrichtung,
- Fig. 8a und 8b: Rohlinge in unterschiedlichen Ansichten, wobei aus einem Rohling bereits ein dentales Ersatzteil herausgearbeitet wurde,
- Fig. 9a bis 12c: alternative Ausführungsformen von zwei teilweise aneinander anliegenden Rohlingen und
- Fig. 13a bis 16c: ein alternatives Ausführungsbeispiel einer Haltevorrichtung mit einem bzw. zwei eingespannten Rohlingen.

Die Fig. 1a bis 2c, welche den Stand der Technik zeigen, wurden bereits in der Beschreibungseinleitung näher erörtert.

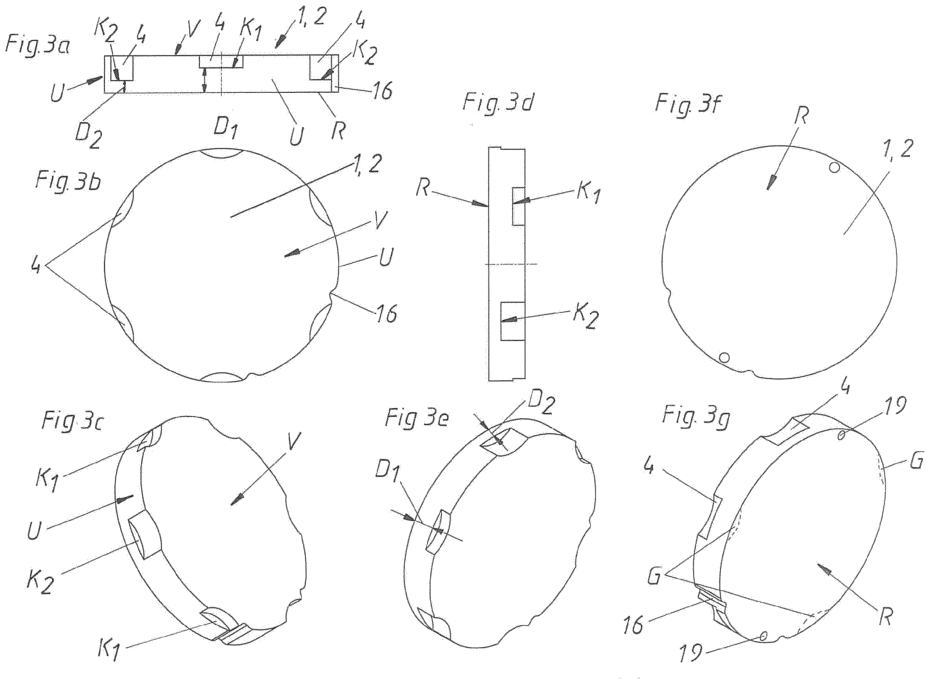

In Fig. 3a ist in einer Seitenansicht die im Wesentlichen kreiszylindermantelförmige Umfangsfläche U eines Rohlings 1, 2 dargestellt. In dieser kreiszylindermantelförmigen Umfangsfläche U sind mehrere Ausnehmungen 4 vorhanden. Durch diese Ausnehmungen 4 sind zur Vorderseite V und zur Rückseite R parallele Haupthalteflächen K₁ und Hilfshalteflächen K₂ am Rohling 1, 2 ausgebildet. Zudem bildet gleichzeitig auch ein Teil der zweiten Seite (entspricht der Rückseite R) Gegenhalteflächen G (siehe Fig. 3g). Die Haupthalteflächen K₁ im Bereich der Ausnehmungen 4 und die Rückseite R sind jeweils um die Standard-Haltedicke D₁ voneinander beabstandet. Im Bereich der Hilfshalteflächen K₂ weist der Rohling 1, 2 die Sonder-Haltedicke D₂ als Abstand zur Rückseite R auf. Die Sonder-Haltedicke D₂ ist kleiner, vorzugsweise halb so groß, wie die Standard-Haltedicke D₁. Auch aus den Fig. 3b bis 3g sind nochmals dieselben Komponenten bzw. Flächen erkennbar. In den Fig. 3a bis 3g ist auch die zumindest eine Positioniernut 16 ersichtlich, über welche die Rohlinge 1, 2 an passender Stelle in der Haltevorrichtung 3 eingespannt werden. Dadurch wird auch garantiert, dass beim Festspannen von zwei Rohlingen 1, 2 die Hilfshalteflächen K₂ der beiden Rohlinge 1, 2 richtig - das heißt axial gegenüberliegend - zueinander positioniert sind. Es ist aber alternativ auch möglich eine Positionierung über die in der Rückseite R ausgebildeten Positionsbohrungen 19 zu realisieren.

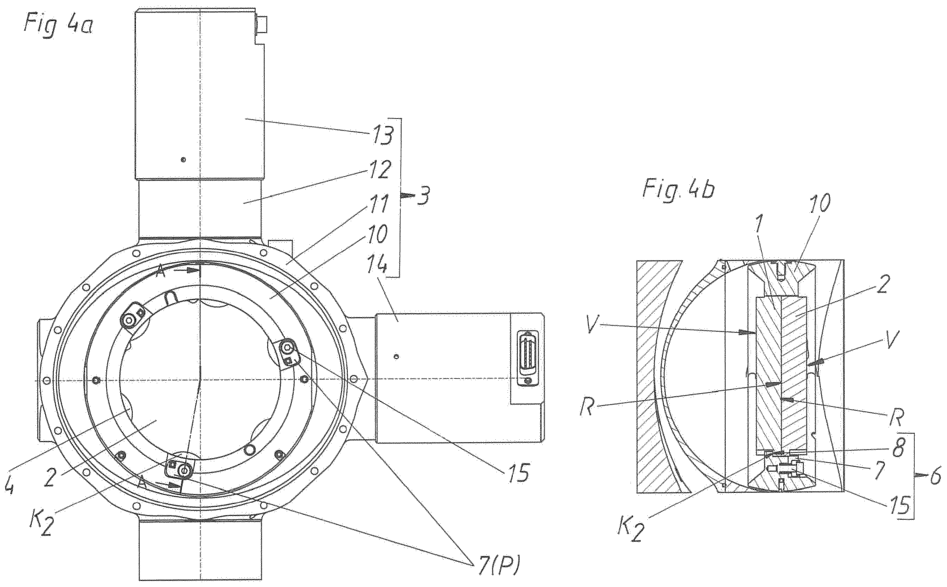

Fig. 4a zeigt eine Haltevorrichtung 3, welche einen inneren Haltering 10, einen äußeren Haltering 11, einen vorzugsweise C-förmigen Träger 12 und zwei Antriebsmotoren 13 und 14 für die beiden Halteringe 10 und 11 aufweist. Im inneren Haltering 10 sind - wie in Fig. 4b ersichtlich - die beiden Rohlinge 1 und 2 eingesetzt. Der erste Rohling 1 liegt dabei über seine Hilfshalteflächen K₂ an den Spannflächen 8 der Spannvorrichtung 6 an. Die Spannvorrichtung 6 wird durch die Spannflächen 8, die Spannteile 7 sowie die Spannbolzen 15 gebildet. In den Fig. 4a und 4b befinden sich die Spannteile 7 noch in der passiven Stellung P.

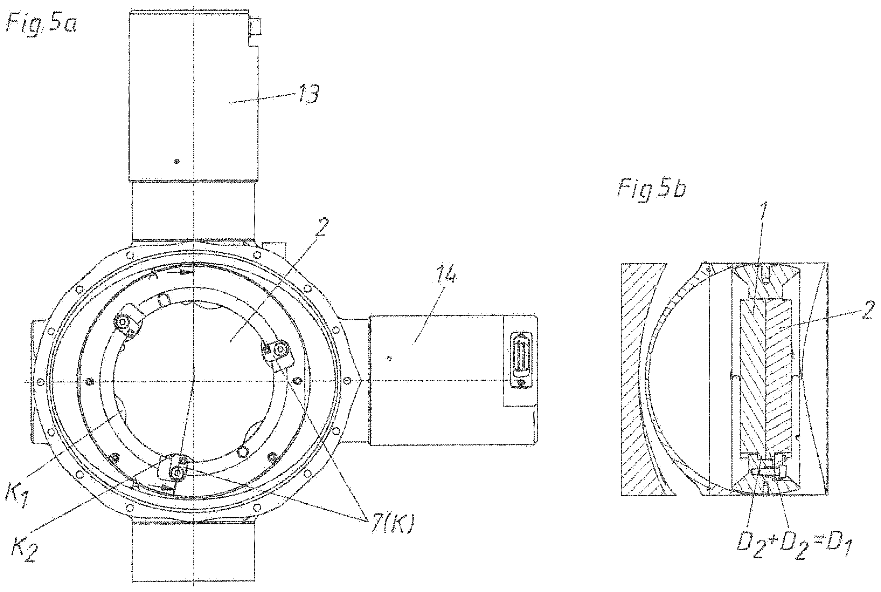

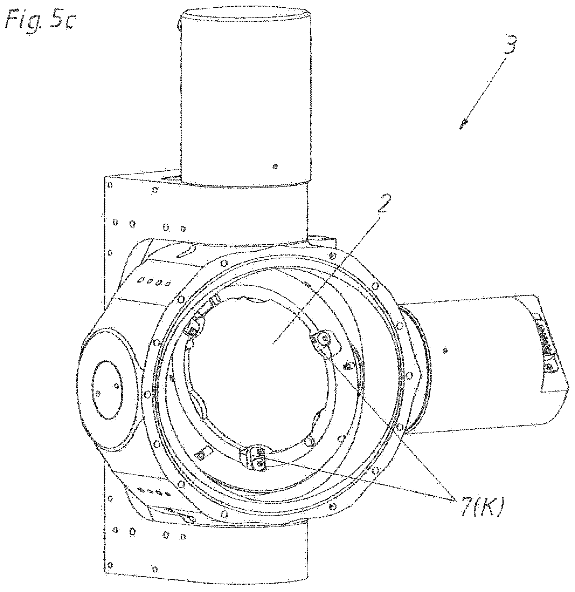

Demgegenüber wurden gemäß den Fig. 5a bis 5c die Spannteile 7 um die Spannbolzen 15 in die Spannstellung K verschwenkt. Dadurch liegen die Spannteile 7 an den Hilfshalteflächen K₂ des zweiten Rohlings 2 auf. Da der erste Rohling 1 gemäß den Fig. 4b und 5b bereits an der Spannfläche 8 des inneren Halterings 10 anliegt, werden beide Rohlinge 1 und 2 gleichzeitig durch die Spannvorrichtung 6 an der Haltevorrichtung 3 festgespannt. Da die Sonder-Haltedicken D₂ der beiden Rohlinge 1 und 2 addiert die Standard-Haltedicke D₁ ergeben, können - auf gleiche Art und Weise wie ein einzelner Rohling 1, 2 über die Haupthalteflächen K₁ und die Rückseite R eingespannt wird - beide Rohlinge 1 und 2 über die jeweiligen Hilfshalteflächen K₂ eingespannt werden. Somit kann ohne eine Änderung an der Haltevorrichtung 3 vornehmen zu müssen, eine effizientere Verwendung erfolgen, indem zwei Rohlinge 1 und 2 gleichzeitig eingespannt werden. Zwischen der Bearbeitung der beiden Rohlinge 1 und 2 muss dadurch kein Umspannen erfolgen.

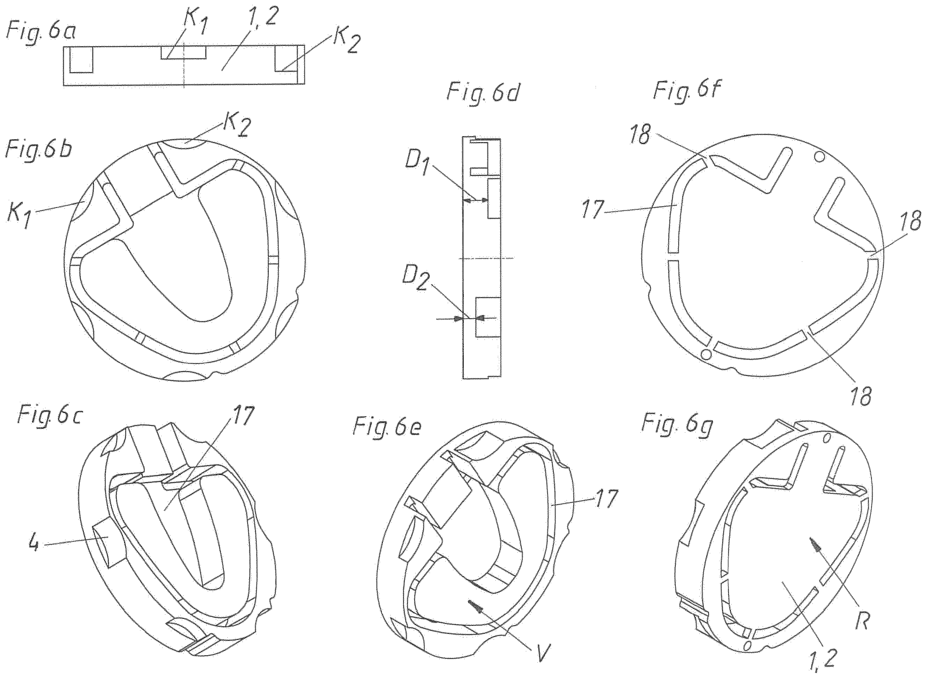

Um die Bearbeitung der Rohlinge 1 und 2 für einen Zahntechniker zu vereinfachen, können die Rohlinge 1, 2 gemäß den Fig. 6a bis 6g vorbearbeitet bzw. vorgefräst sein. Im Speziellen werden dafür die Rohlinge 1, 2 (Blöcke) so ausgeformt, dass die übrigbleibende Geometrie einem Gebiss nachempfunden ist. Dies hat den Vorteil, dass nicht mehr der komplette Block zerspant werden muss. Die Ausfräsungen 17 müssen somit nicht mehr von einem Gerät beim Zahntechniker eingearbeitet werden, sondern werden bereits mit Ausfräsungen 17 ausgeliefert. Der gebissförmige innere Bereich dieses Rohlings 1, 2 ist durch Verbindungsstege 18 mit dem äußeren Bereich verbunden.

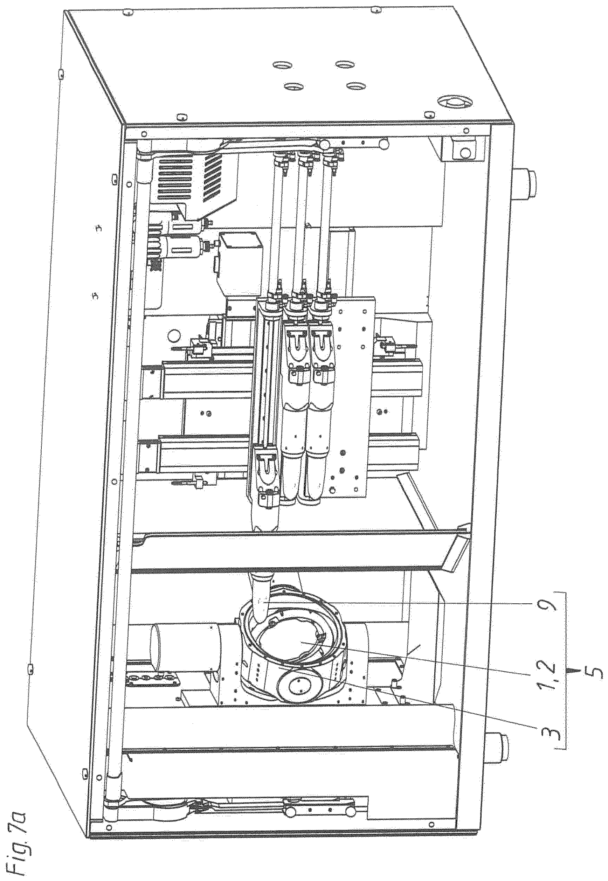

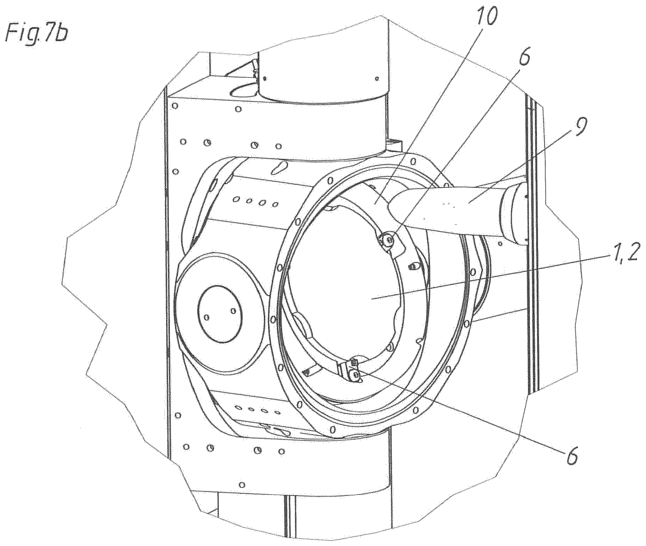

Fig. 7a zeigt eine Anordnung 5 mit einer Haltevorrichtung 3, zwei in der Haltevorrichtung 3 eingespannten Rohlingen 1 und 2 sowie einer Bearbeitungsvorrichtung 9. Diese Bearbeitungsvorrichtung 9 kann, wie in Fig. 7b dargestellt, eine Spindel aufweisen. An der Vorderseite der Spindel kann ein Fräswerkzeug oder ähnliches angeordnet sein, um die einzelnen Rohlinge 1 und 2 nacheinander jeweils von der Vorderseite V zu bearbeiten. Dafür kann sich der innere Haltering 10 zumindest um 180°, vorzugsweise komplette 360°, um eine Achse drehen. Aus dieser Fig. 7b ist auch gut ersichtlich, dass in eingespanntem Zustand die komplette Vorderseite V der Rohlinge 1 und 2 im Wesentlichen vollständig zugänglich ist. Dadurch wird unnötiges Umspannen verhindert und ein vollständiges Herausarbeiten der Dentalelemente E aus zwei Rohlingen 1 und 2 ist durchführbar, ohne dass dazwischen Arbeiten von einem Zahntechniker notwendig wären.

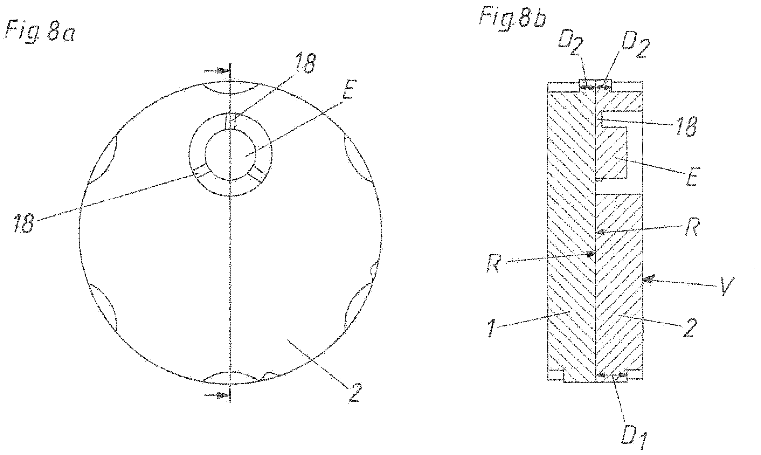

Die Fig. 8a und 8b zeigen zwei Rohlinge 1 und 2, wobei aus dem zweiten Rohling 2 bereits ein nur schematisch angedeutetes Dentalelement E herausgearbeitet ist. Dieses Dentalelement E ist über die Stege 18 noch mit dem restlichen Bereich des Rohlings 2 verbunden. In späterer Folge wird dann durch einen Zahntechniker oder durch spezielle Geräte dieses Dentalelement E aus dem zweiten Rohling 2 herausgelöst. Dentalelemente E können bspw. Kronen, Brücken, oder ähnliches sein. Bevorzugt werden aus diesen Rohlinge Dentalmodelle hergestellt, um anschließend Gebissbewegungssimulationen durchzuführen. Auch Trägermodelle für Zahnersatz können hergestellt werden. Die Rohlinge 1 und 2 können bspw. aus Zirkon, aus Metall, aus Gips oder aus Kunststoff bestehen. Aus Fig. 8b ist nochmals ersichtlich, dass die Sonder-Haltedicken D₂ im Bereich der Hilfshalteflächen K₂ zusammen die Standard-Haltedicke D₁ ergeben.

Die bisher gezeigten und beschriebenen Ausführungsbeispiele sind allesamt geeignet, um bei einer konkreten Ausführungsvariante des Anmelders eingesetzt zu werden. Natürlich kann aber die vorliegende Erfindung bei jeder Haltevorrichtung sinngemäß eingesetzt werden, was durch die folgenden Ausführungsbeispiele näher erläutert wird.

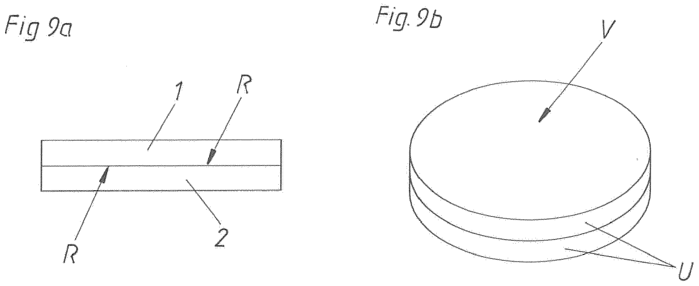

Die Fig. 9a und 9b zeigen zwei Rohlinge 1 und 2, welche über ihre jeweilige Rückseite R aneinander anliegen. Solche einfachen, zylinderförmigen Rohlinge 1 und 2 können in einer erfindungsgemäßen Anordnung festgespannt und über beide im Wesentlichen vollständig zugängliche Vorderseiten V bearbeitet werden.

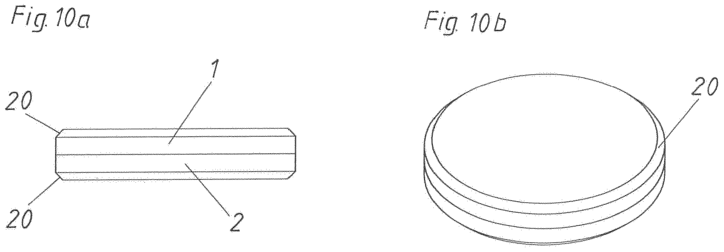

Dasselbe gilt für die Rohlinge 1 und 2 gemäß den Fig. 10a und 10b, wobei diese Rohlinge 1 und 2 jeweils eine abgeschrägte Fläche 20 aufweisen.

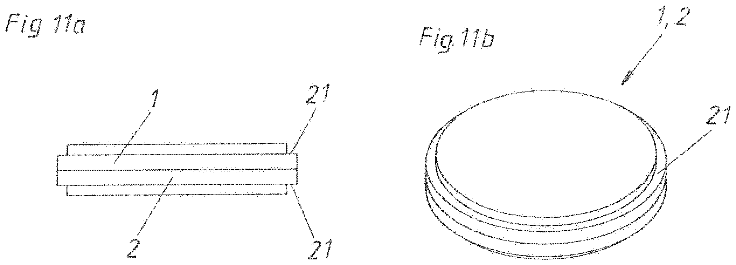

Die Fig. 11a und 11b zeigen Rohlinge 1 und 2 mit jeweils einer durchgehenden, peripheren Abstufung 21.

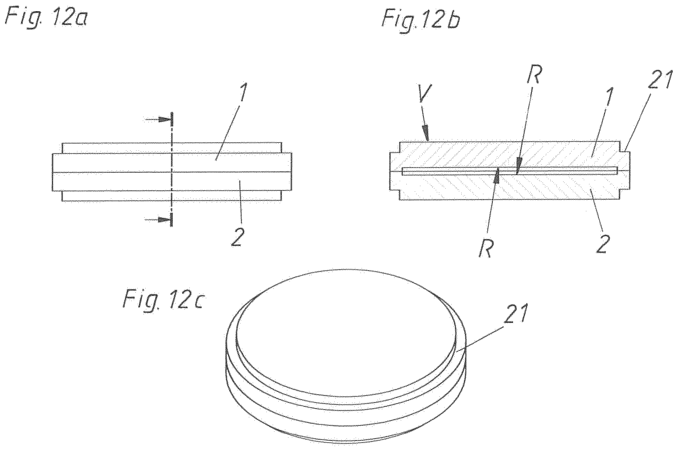

Eine derartige Abstufung 21 ist auch bei den Rohlingen gemäß der Fig. 12a bis 12c vorhanden. Ein Unterschied liegt aber darin, dass die Rohlinge 1 und 2 nicht vollflächig über ihre Rückseiten R aneinander liegen, sondern sich nur in einem peripheren Bereich (Randbereich) direkt kontaktieren.

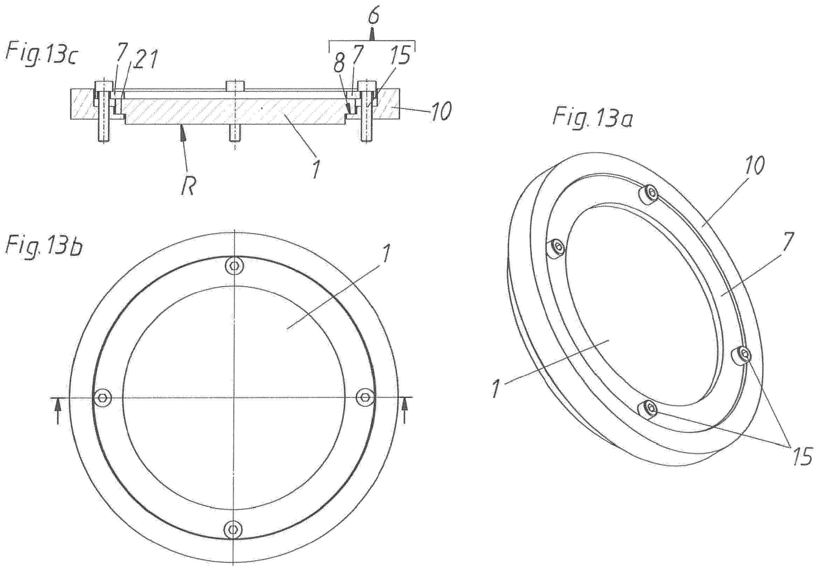

In den Fig. 13a bis 16c ist ein alternatives Ausführungsbeispiel einer Spannvorrichtung 6 gezeigt. So haben alle diese Darstellungen gemein, dass die Spannvorrichtung 6 ein ringförmiges, einstückiges Spannteil 7, mehrere Spannbolzen 15 in Form von Schrauben und die am (inneren) Haltering 10 ausgebildeten Spannflächen 8 aufweist.

Um einen einzelnen Rohling 1 festzuspannen, wird gemäß Fig. 13c zunächst der Rohling 1 über die Abstufung 21 auf die Spannfläche 8 aufgelegt. Danach wird das ringförmige Spannteil 7 an die gegenüberliegende Seite des Rohlings 1 angelegt. Danach werden die Spannbolzen 15 in entsprechende Ausnehmungen im Spannteil 7 eingeführt. An den Spannbolzen 15 ist jeweils ein Außengewinde ausgebildet, welches in ein im Haltering 10 ausgebildetes Innengewinde korrespondierend eingreift. Durch Hineindrehen dieser Spannbolzen 15 drückt das Spannteil 7 gegen den Rohling 1, wodurch der Rohling zwischen Spannteil 7 und Spannfläche 8 eingeklemmt und somit festgespannt bzw. festgehalten wird.

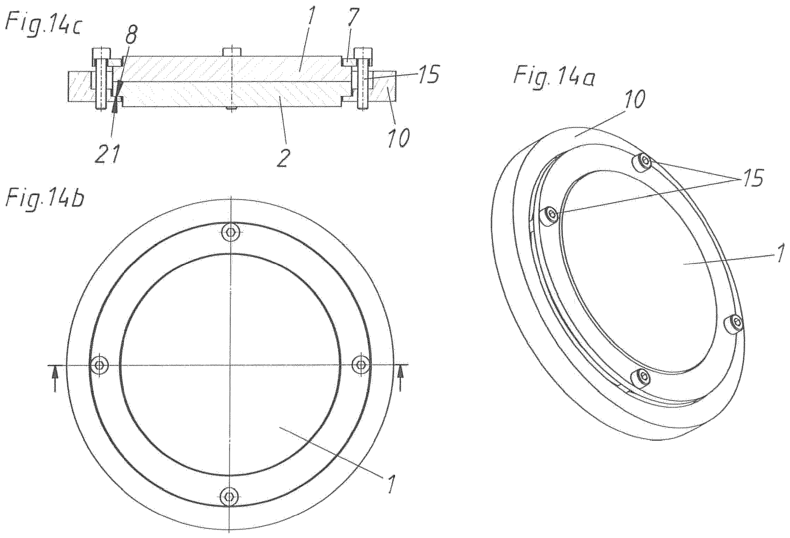

Auf sinngemäß gleiche Art und Weise werden gemäß den Fig. 14a bis 14c zwei Rohlinge 1 und 2 an einer Haltevorrichtung 3 festgespannt. Da bei dieser Spannvorrichtung 6 - im Gegensatz zur Spannvorrichtung 6 gemäß dem ersten Ausführungsbeispiel - der Abstand zwischen Spannteil 7 und Spannfläche 8 in der Spannstellung K veränderlich ist, wird ebenfalls eine Anordnung 5 geschaffen, bei welcher im Wesentlichen die kompletten Vorderseiten V beider Rohlinge 1 und 2 für eine Bearbeitungsvorrichtung 9 zugänglich sind. Dies ist vor allem auch deshalb möglich, da die Rohlinge 1 und 2 nur über ihre peripheren Bereiche an der Haltevorrichtung 3 festgespannt bzw. festspannbar sind (dies gilt auch für das erste Ausführungsbeispiel).

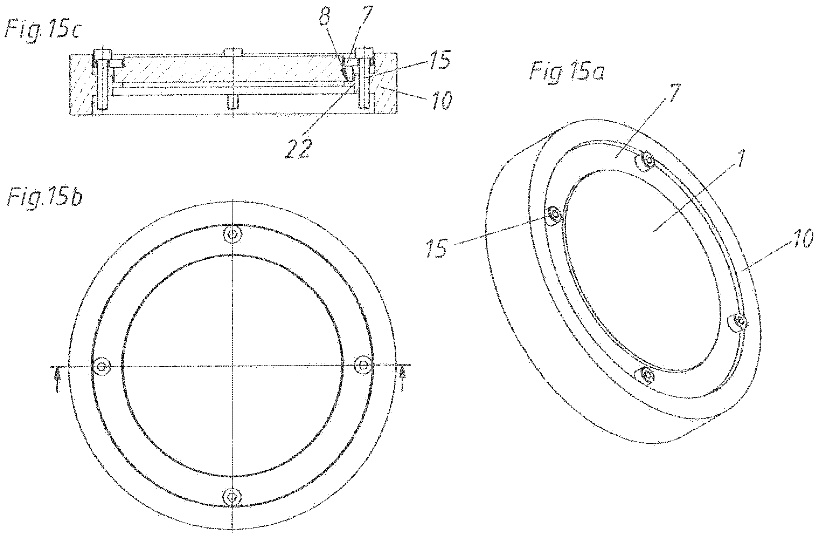

Auf Fig. 15c geht hervor, dass der Haltering 10 zusätzlich ein Zwischenstück 22 aufweist, welcher die Spannfläche 8 mitbildet.

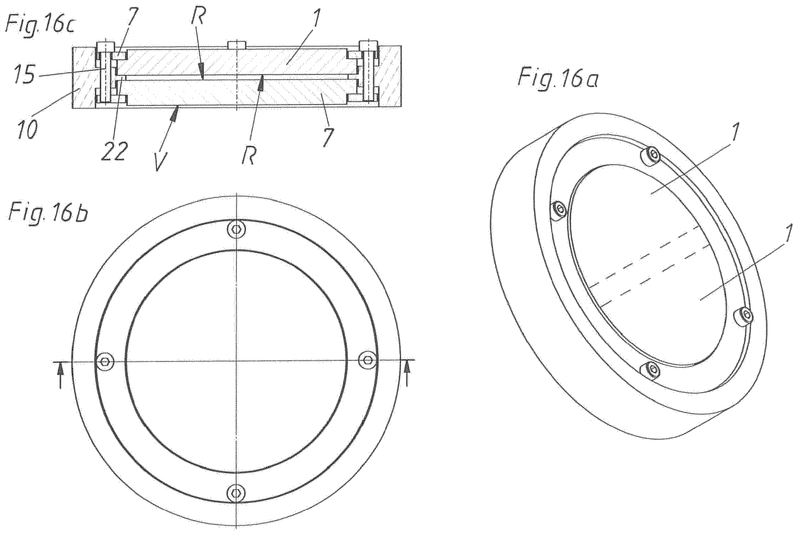

In den Fig. 16a bis 16c sind zwei Rohlinge 1 und 2 in eine solche Haltevorrichtung 3 eingespannt. Dazu ist ein zweites, unteres ringförmiges Spannteil 7 vorgesehen. In diesem Fall kann in diesem unteren Spannteil 7 ein zum Spannbolzen 15 passendes Innengewinde ausgebildet sein. Es ist aber auch möglich, dass das untere Spannteil 7 über zwei "von unten kommende" und von dort mit dem Haltering 10 verschraubbare Spannbolzen 15 mit dem Haltering 10 verbindbar ist. In Fig. 16a ist durch die strichlierten Linien angedeutet, dass mehr als zwei Rohlinge 1 und 2 in einer Haltevorrichtung 3 gehalten werden können. So können beispielsweise zwei separate, beabstandete und kleinere (in diesem Fall in etwa halbkreisförmige) Rohlinge 1 in "einer Ebene" eingespannt sein. Dadurch ist es auch möglich, dass der zweite Rohling 2 zumindest teilweise über seine Rückseite R von der Bearbeitungsvorrichtung 9 bearbeitbar ist. Dies ist auch möglich, wenn vorher durch Bearbeitung des ersten Rohlings 1 bereits ein ausreichender Bereich freigestellt wurde, der einen Zugang zur Rückseite R des zweiten Rohlings 2 ermöglicht.

### Bezugszeichenliste:

- 1: erster Rohling
- 2: zweiter Rohling
- 3: Haltervorrichtung
- 4: Ausnehmungen
- 5: Anordnung
- 6: Spannvorrichtung
- 7: Spannteil
- 8: Spannfläche
- 9: Bearbeitungsvorrichtung
- 10: innerer Haltering
- 11: äußerer Haltering
- 12: Träger
- 13: Antriebsmotor
- 14: Antriebsmotor
- 15: Spannbolzen
- 16: Positioniernut
- 17: Vorfräsung
- 18: Verbindungsstege
- 19: Positionsbohrung
- 20: abgeschrägte Fläche
- 21: Abstufung
- 22: Zwischenstück
- K₁: Haupthalteflächen
- K₂: Hilfshalteflächen
- D₁: Standard-Haltedicke
- D₂: Sonder-Haltedicke
- V: Vorderseite
- R: Rückseite
- U: Umfangsfläche
- P: passive Stellung
- K: Spannstellung
- E: Dentalelement
- G: Gegenhaltefläche
- 11: äußerer Haltering
- 12: Träger
- 13: Antriebsmotor
- 14: Antriebsmotor
- 15: Spannbolzen
- 16: Positioniernut
- 17: Vorfräsung
- 18: Verbindungsstege
- 19: Positionsbohrung
- 20: abgeschrägte Fläche
- 21: Abstufung
- 22: Zwischenstück
- K₁: Haupthalteflächen
- K₂: Hilfshalteflächen
- D₁: Standard-Haltedicke
- D₂: Sonder-Haltedicke
- V: Vorderseite
- R: Rückseite
- U: Umfangsfläche
- P: passive Stellung
- K: Spannstellung
- E: Dentalelement
- G: Gegenhaltefläche

## Patentansprüche

1. Rohling (1, 2) zur Herstellung eines Dentalelements (E), mit einer ersten Seite, einer zweiten Seite und zumindest einer von der zweiten Seite beabstandeten Haupthaltefläche (K₁) zum Festhalten des Rohlings (1, 2) über die zweite Seite und die Haupthaltefläche (K₁) an einer Haltevorrichtung (3), wobei der Rohling (1, 2) zwischen Haupthaltefläche (K₁) und zweiter Seite eine Standard-Haltedicke (D₁) aufweist, aufweisend zumindest eine, von der zweiten Seite beabstandete Hilfshaltefläche (K₂) zum Festhalten des Rohlings (1, 2) an einer Haltevorrichtung (3), wobei der Rohling (1, 2) zwischen der zumindest einen Hilfshaltefläche (K₂) und der zweiten Seite eine Sonder-Haltedicke (D₂) aufweist, wobei die Standard-Haltedicke (D₁) größer ist als die Sonder-Haltedicke (D₂).

2. Rohling nach Anspruch 1, **dadurch gekennzeichnet, dass** die Standard-Haltedicke (D₁) doppelt so groß wie die Sonder-Haltedicke (D₂) ist.

3. Rohling nach Anspruch 1 oder 2, **dadurch gekennzeichnet, dass** der Rohling (1, 2) scheibenförmig ausgebildet ist und eine Umfangsfläche (U) aufweist.

4. Rohling nach Anspruch 1 oder 3, **dadurch gekennzeichnet, dass** mehrere, vorzugsweise drei, Haupthalteflächen (K₁) regelmäßig, vorzugsweise jeweils um 120°, voneinander beabstandet am Rohling (1, 2) ausgebildet sind.

5. Rohling nach einem der Ansprüche 1 bis 4, **dadurch gekennzeichnet, dass** mehrere, vorzugsweise drei, Hilfshalteflächen (K₂) regelmäßig, vorzugsweise jeweils um 120°, voneinander beabstandet am Rohling (1, 2) ausgebildet sind.

6. Rohling nach einem der Ansprüche 1 bis 5, **dadurch gekennzeichnet, dass** die Haupthaltefläche (K₁) und die Hilfshaltefläche (K₂) voneinander beabstandet am Rohling (1, 2) ausgebildet sind.

7. Rohling nach Anspruch 6, **dadurch gekennzeichnet, dass** die mehreren Haupthalteflächen (K₁) und die mehreren Hilfshalteflächen (K₂) voneinander regelmäßig, vorzugsweise jeweils um 60°, beabstandet am Rohling (1, 2) ausgebildet sind.

8. Rohling nach einem der Ansprüche 3 bis 7, **dadurch gekennzeichnet, dass** die erste Seite und die zweite Seite im Wesentlichen eben und zueinander parallel ausgebildet sind und die Umfangsfläche (U) im Wesentlichen rechtwinkelig zur zweiten Seite und zur ersten Seite ausgerichtet ist.

9. Set aus wenigstens einem ersten Rohling (1) und einem zweiten Rohling (2) jeweils nach einem der Ansprüche 1 bis 8, **dadurch gekennzeichnet, dass** die Sonder-Haltedicke (D₂) des ersten Rohlings (1) und die Sonder-Haltedicke (D₂) des zweiten Rohlings (2) addiert die Standard-Haltedicke (D₁) der beiden Rohlinge (1, 2) ergibt.

10. Set nach Anspruch 9, **dadurch gekennzeichnet, dass** die Sonder-Haltedicke (D₂) der beiden Rohlinge (1, 2) gleich groß ist.

11. Set nach Anspruch 9 oder 10, **dadurch gekennzeichnet, dass** beide Rohlinge (1, 2) identisch ausgebildet sind.

12. Verfahren zum Festspannen von zwei Rohlingen (1, 2) nach einem der Ansprüche 1 bis 8 an einer Haltevorrichtung (3), mit den Schritten:
- Einsetzen eines ersten Rohlings (1) in die Haltevorrichtung (3), wobei der erste Rohling (1) über zumindest eine Hilfshaltefläche (K₂) auf einer Spannfläche (8) einer Spannvorrichtung (6) der Haltevorrichtung (3) aufliegt,
- Einsetzen des zweiten Rohlings (2) in die Haltevorrichtung (3), wobei die Rohlinge (1, 2) mit ihren jeweiligen Rückseiten (R) einander zugewandt sind und die zumindest eine Hilfshaltefläche (K₂) des zweiten Rohlings (2) passend zu der zumindest einen Hilfshaltefläche (K₂) des ersten Rohlings (1) ausgerichtet ist,
- Bewegen des Spannteils (7) der Spannvorrichtung (6) der Haltevorrichtung (3) aus einer passiven Stellung (P) in eine Spannstellung (K), sodass in der Spannstellung (K) das Spannteil (7) an der zumindest einen Hilfshaltefläche (K₂) des zweiten Rohlings (2) anliegt und beide Rohlinge (1, 2) gemeinsam über die jeweiligen Hilfshalteflächen (K₂) zwischen Spannteil (7) und Spannfläche (8) der Spannvorrichtung (6) der Haltevorrichtung (3) eingespannt sind.

## Claims

1. A blank (1, 2) for the production of a dental element (E), including a first side, a second side and at least a main holding surface (K₁) for holding the blank (1, 2) at a holding device (3) via the second side and the main holding surface (K₁), wherein the holding surface (K₁) is spaced from the second side, wherein the blank (1, 2) has a standard holding thickness (D₁) between the main holding surface (K₁) and the second side, comprising at least one auxiliary holding surface (K₂) for holding the blank (1, 2) at a holding device (3), wherein the auxiliary holding surface (K₂) is spaced from the second side, wherein the blank (1, 2) has a non-standard holding thickness (D₂) between the at least one auxiliary holding surface (K₂) and the second side, wherein the standard holding thickness (D₁) is larger than the non-standard holding thickness (D₂).

2. The blank according to claim 1, wherein the standard holding thickness (D₁) is twice as big as the non-standard holding thickness (D₂).

3. The blank according to claim 1, wherein the blank (1, 2) is disk-shaped and has a circumferential surface (U).

4. The blank according to claim 1, wherein several, preferably three, main holding surfaces (K₁) are arranged on the blank (1, 2) regularly spaced from each other, preferably spaced by 120° each.

5. The blank according to claim 1, wherein several, preferably three, auxiliary holding surfaces (K₂) are arranged on the blank (1, 2) regularly spaced from each other, preferably spaced by 120° each.

6. The blank according to claim 1, wherein the main holding surface (K₁) and the auxiliary holding surface (K₂) are arranged at the blank (1, 2) spaced from each other.

7. The blank according to claim 6, wherein the several main holding surfaces (K₁) and the several auxiliary holding surfaces (K₂) are arranged on the blank (1, 2) regularly spaced from each other, preferably spaced by 60° each.

8. The blank according to one of the claims 3 to 7, wherein the first side and the second side are formed substantially flat and parallel to each other and the circumferential surface (U) is aligned substantially rectangular to the first side and to the second side.

9. A set consisting of a first blank (1) and a second blank (2) each according to one of the claims 1 to 8, **characterized in that** the addition of the non-standard holding thickness (D₂) of the first blank (1) and the non-standard holding thickness (D₂) of the second blank (2) results in the standard holding thickness (D₁) of both blanks (1, 2).

10. The set according to claim 9, wherein the non-standard holding thickness (D₂) of both blanks (1, 2) is equal.

11. The set according to claim 9 or 10, wherein both blanks (1, 2) are formed identical.

12. A method for chucking two blanks (1, 2) according to one of the claims 1 to 8 at a holding device (3), including the steps:
- inserting the first blank (1) in the holding device (3), wherein the first blank (1) abuts a tensioning surface (8) of a tensioning device (6) of the holding device (3) via the at least one auxiliary holding surface (K₂),
- inserting the second blank (2) in the holding device (3), wherein the blanks (1, 2) are facing with their back sides (R) towards each other and the at least one auxiliary holding surface (K₂) of the second blank (2) is aligned corresponding to the at least one auxiliary holding surface (K₂) of the first blank (1), and
- moving the tensioning part (7) of the tensioning device (6) of the holding device (3) from a passive state (P) into a tensioning state (K), so that in the tensioning state (K) the tensioning part (7) abuts the at least one auxiliary holding surface (K₂) of the second blank (2) and both blanks (1, 2) are commonly chucked via their auxiliary holding surfaces (K₂) between the tensioning part (7) and the tensioning surface (8) of the tensioning device (6) of the holding device (3).

## Revendications

1. Ebauche (1, 2) destinée à la fabrication d'un élément dentaire (E), dotée d'un premier côté, d'un deuxième côté et d'au moins une surface de retenue principale (K₁), espacée du deuxième côté, destinée à maintenir l'ébauche (1, 2) au-dessus du deuxième côté et de la surface de retenue principale (K₁) sur un dispositif de retenue (3), l'ébauche (1, 2) présentant entre la surface de retenue principale (K₁) et le deuxième côté, une épaisseur de retenue standard (D₁), présentant au moins une surface de retenue auxiliaire (K₂), espacée du deuxième côté, destinée à maintenir l'ébauche (1, 2) sur un dispositif de retenue (3), l'ébauche (1, 2) présentant entre la au moins une surface de retenue auxiliaire (K₂) et le deuxième côté, une épaisseur de retenue spéciale (D₂), l'épaisseur de retenue standard (D₁) étant plus grande que l'épaisseur de retenue spéciale (D₂).

2. Ebauche selon la revendication 1, **caractérisée en ce que** l'épaisseur de retenue standard (D₁) est deux fois plus grande que l'épaisseur de retenue spéciale (D₂).

3. Ebauche selon la revendication 1 ou 2, **caractérisée en ce que** l'ébauche (1, 2) est constituée en forme de disque et présente une surface circonférentielle (U).

4. Ebauche selon la revendication 1 ou 3, **caractérisée en ce que** plusieurs, de préférence trois, surfaces de retenue principale (K₁) sont constituées de façon espacée régulièrement, de préférence de respectivement 120°, les unes des autres sur l'ébauche (1, 2).

5. Ebauche selon l'une des revendications 1 à 4, **caractérisée en ce que** plusieurs, de préférence trois, surfaces de retenue auxiliaire (K₂) sont constituées de façon espacée régulièrement, de préférence de respectivement 120°, les unes des autres sur l'ébauche (1, 2).

6. Ebauche selon l'une des revendications 1 à 5, **caractérisée en ce que** la surface de retenue principale (K₁) et la surface de retenue auxiliaire (K₂) sont constituées de façon espacée l'une de l'autre sur l'ébauche (1, 2).

7. Ebauche selon la revendication 6, **caractérisée en ce que** les plusieurs surfaces de retenue principale (K₁) et les plusieurs surfaces de retenue auxiliaire (K₂) sont constituées de façon régulièrement espacée, de préférence de respectivement 60°, sur l'ébauche (1, 2).

8. Ebauche selon l'une des revendications 3 à 7, **caractérisée en ce que** le premier côté et le deuxième côté sont constitués de façon essentiellement plane et parallèle entre eux, et la surface circonférentielle (U) est orientée essentiellement à angle droit par rapport au deuxième côté et au premier côté.

9. Ensemble d'au moins une première ébauche (1) et d'une deuxième ébauche (2) respectivement selon l'une des revendications 1 à 8, **caractérisé en ce que** l'addition de l'épaisseur de retenue spéciale (D₂) de la première ébauche (1) et de l'épaisseur de retenue spéciale (D₂) de la deuxième ébauche (2) donne l'épaisseur de retenue standard (D₁) des deux ébauches (1, 2).

10. Ensemble selon la revendication 9, **caractérisé en ce que** l'épaisseur de retenue spéciale (D₂) des deux ébauches (1, 2) est de dimension égale.

11. Ensemble selon la revendication 9 ou 10, **caractérisé en ce que** les deux ébauches (1, 2) sont constituées de façon identique.

12. Procédé de serrage de deux ébauches (1, 2) selon l'une des revendications 1 à 8 sur un dispositif de retenue (3), avec les étapes :
- introduction d'une première ébauche (1) dans le dispositif de retenue (3), la première ébauche (1) reposant au-dessus d'au moins une surface de retenue auxiliaire (K₂) sur une surface de serrage (8) d'un dispositif de serrage (6) du dispositif de retenue (3),
- introduction de la deuxième ébauche (2) dans le dispositif de retenue (3), les ébauches (1, 2) étant, par leurs côtés arrière (R) respectifs, tournées l'une vers l'autre, et la au moins une surface de retenue auxiliaire (K₂) de la deuxième ébauche (2) étant orientée de façon adaptée à l'au moins une surface de retenue auxiliaire (K₂) de la première ébauche (1),
- déplacement de la partie de serrage (7) du dispositif de serrage (6) du dispositif de retenue (3) à partir d'une position passive (P) vers une position de serrage (K) de telle sorte que, dans la position de serrage (K), la partie de serrage (7) est adjacente à la au moins une surface de retenue auxiliaire (K₂) de la deuxième ébauche (2), et les deux ébauches (1, 2) sont serrées conjointement au-dessus des surfaces de retenue auxiliaire (K₂) respectives entre la partie de serrage (7) et la surface de serrage (8) du dispositif de serrage (6) du dispositif de retenue (3).
